# EUROPEAN PATENT APPLICATION

(11) **EP 4 624 877 A1**
(43) Date of publication of application: **01.10.2025**
(21) Application number: 25165226.9
(22) Date of filing: 21.03.2025
(51) Int. Cl.: G01H 11/08, G01N 29/02, G01N 29/036, G01N 29/24, G01N 29/32, G01N 5/02

(54) **SENSING DEVICE**

(30) Priority: 28.03.2024 JP 2024053835
(71) Applicant: Nihon Dempa Kogyo Co., Ltd., Tokyo 151-8569 (JP)
(72) Inventor: KUKITA, Hiroyuki, Saitama (JP)
(74) Representative: Becker, Eberhard

(57) **Abstract**

A sensing device for sensing a substance to be sensed contained in a gas around a piezoelectric resonator based on change in an oscillation frequency of the piezoelectric resonator. The sensing device includes the piezoelectric resonator to which the substance to be sensed attaches by being cooled, a temperature changing unit, a substrate, a frequency measuring unit, a heater, and a power supplying unit. The temperature changing unit is configured to change a temperature of the piezoelectric resonator. An integrated circuit chip including an oscillator circuit that oscillates the piezoelectric resonator is disposed on the substrate. The frequency measuring unit receives a frequency signal output from the oscillator circuit and measures an oscillation frequency of the piezoelectric resonator. The heater is disposed separately from the temperature changing unit for heating the integrated circuit chip. The power supplying unit is configured to change an electric power supplied to the heater.

## Description

### TECHNICAL FIELD

This disclosure relates to a sensing device that senses a substance to be sensed by frequency change of a piezoelectric resonator.

### DESCRIPTION OF THE RELATED ART

For example, as a sensing device that senses a substance contained in a gas, there has been known a device that uses quartz crystal microbalance (QCM) using a crystal unit. In this sensing device, the crystal unit is cooled down to, for example, a cryogenic temperature of approximately -190°C to cause the gas to attach to the crystal unit, and subsequently, a temperature of the crystal unit is gradually increased to cause the gas attaching to the crystal unit to detach. Oscillation frequency change caused by the detachment and the temperature at which the oscillation frequency change has occurred enable analyses, such as identification of gas constituents and detection of an attachment amount.

Japanese Unexamined Patent Application Publication No. 2011-203007 describes a technique that improves sensitivity of a sensing sensor by cooling a crystal unit. Japanese Unexamined Patent Application Publication No. 2012-220454 describes a technique that cools a substrate on which an IC chip is installed.

### SUMMARY

### [Technical problem]

The above-described sensing device includes a sensing sensor arranged in an environment where a measurement is taken. For example, this sensing sensor is provided with an integrated circuit chip besides the above-described crystal unit. In order to avoid oscillation from becoming unstable due to a relatively increased distance from the crystal unit, an oscillator circuit that oscillates the crystal unit is incorporated in this integrated circuit chip, and thus, is disposed within the sensing sensor.

A semiconductor of silicon or the like that configures the integrated circuit chip has a reduced density of a carrier when it is excessively cooled, and has therefore an enhanced insulating property. Accordingly, when the crystal unit is cooled to cause the substance to be sensed to attach, it is necessary to prevent the oscillation of this crystal unit from being disabled by this integrated circuit chip being excessively cooled to stop functions of respective circuit elements. On the other hand, under a relatively high temperature environment, a reduced negative resistance of the oscillator circuit decreases an oscillation margin. That can cause an operation of this oscillator circuit to be unstable or disabled.

Causing a gas to attach and detach by changing the temperature of the crystal unit within various ranges and measuring oscillation frequencies have been examined. Specifically, changing the temperature of the crystal unit within a range having a lower limit temperature lower than a temperature of approximately -190°C described above and obtaining an oscillation frequency, and changing the temperature of the crystal unit within a range having a lower limit temperature higher than -190°C and obtaining an oscillation frequency have been examined. Accordingly, an ambient temperature of the oscillator circuit disposed together with the crystal unit in the sensing sensor may change each time the sensing sensor is used.

From the aspects described above, a sensing device that enables stably oscillating a crystal unit and measuring a frequency even though the ambient temperature of the oscillator circuit changes. Japanese Unexamined Patent Application Publication No. 2011-203007 and Japanese Unexamined Patent Application Publication No. 2012-220454 described above fail to describe a method to solve such a problem.

A need thus exists for a sensing device which is not susceptible to the drawback mentioned above.

### [Technical solution]

According to an aspect of this disclosure, there is provided a sensing device for sensing a substance to be sensed that is contained in a gas around a piezoelectric resonator and that is attached to the piezoelectric resonator based on change in an oscillation frequency of the piezoelectric resonator. The sensing device includes the piezoelectric resonator to which the substance to be sensed attaches by being cooled, a temperature changing unit, a substrate, a frequency measuring unit, a heater, and a power supplying unit. The temperature changing unit is configured to change a temperature of the piezoelectric resonator. An integrated circuit chip including an oscillator circuit that oscillates the piezoelectric resonator is disposed on the substrate. The frequency measuring unit is configured to receive a frequency signal output from the oscillator circuit and measure an oscillation frequency of the piezoelectric resonator. The heater is disposed separately from the temperature changing unit for heating the integrated circuit chip. The power supplying unit is configured to change an electric power supplied to the heater.

According to another aspect of this disclosure, the power supplying unit is a voltage changing unit, configured to change the electric power by changing a voltage supplied to the heater.

According to another aspect of this disclosure, the voltage changing unit is configured to supply a voltage to the oscillator circuit via a regulator disposed on the substrate, and the voltages supplied to the regulator and the heater are changed together.

According to another aspect of this disclosure, the heater is disposed on the substrate.

According to another aspect of this disclosure, further including: a control unit, configured to change a voltage supplied to the heater corresponding to an output state of the frequency signal to the frequency measuring unit.

According to another aspect of this disclosure, the output state of the frequency signal is presence or absence of an output of the frequency signal to the frequency measuring unit, and the control unit is configured to determine the voltage supplied to the heater based on the presence or absence of the frequency signal when the voltage applied to the heater is increased from an initial value that is predetermined

### [Technical effect]

The sensing device of the present disclosure enables stably oscillating the piezoelectric resonator and measuring the frequency in the sensing device for sensing the substance to be sensed contained in the gas that attaches to the piezoelectric resonator.

### BRIEF DESCRIPTION OF THE DRAWINGS

The foregoing and additional features and characteristics of this disclosure will become more apparent from the following detailed description considered with reference to the accompanying drawings, wherein:
FIG. 1 is a longitudinal sectional side view of an experiment device using a sensing device according to an embodiment;
FIG. 2 is a block diagram illustrating the sensing device; and
FIG. 3 is a flowchart illustrating a temperature adjustment operation of the sensing device.

### DETAILED DESCRIPTION

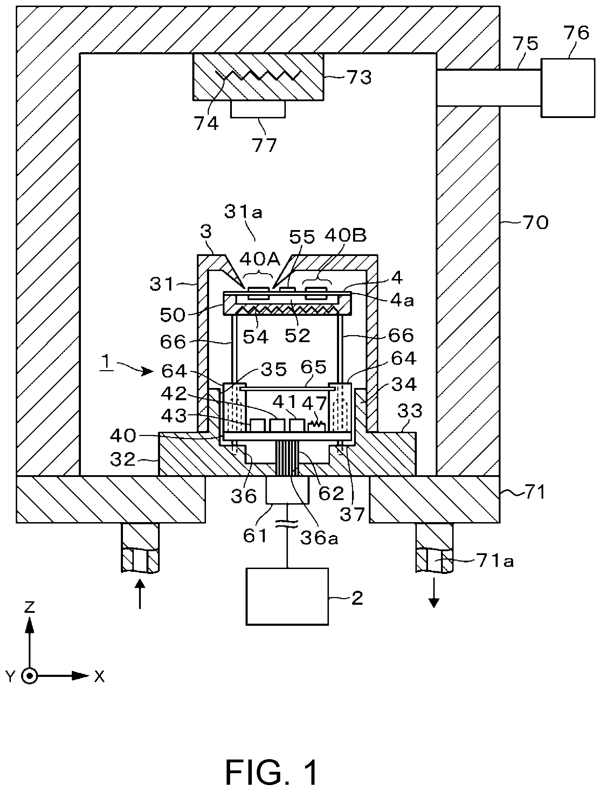

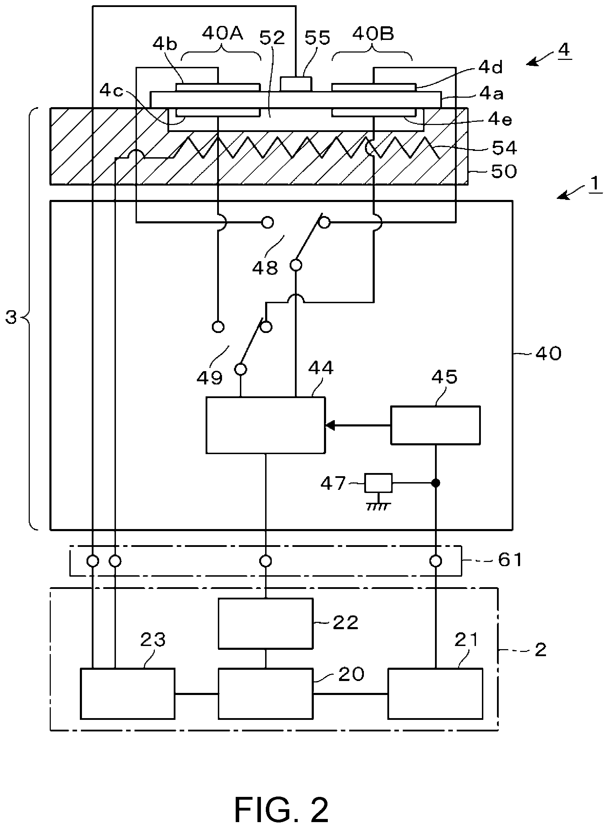

An overall configuration of a sensing device 1 according to the present disclosure will be described on the basis of FIG. 1 and FIG. 2. FIG. 1 is a longitudinal sectional side view illustrating an exemplary experiment device for detecting a substance to be sensed contained in a gas and the sensing device 1 used for the experiment device. FIG. 2 is a block diagram illustrating the sensing device 1. The sensing device 1 includes a main body portion 2 and a sensing sensor 3 configured to be able to connect to the main body portion 2. The main body portion 2 feeds a power to the sensing sensor 3, and takes a measurement of an oscillation frequency of the crystal unit 4 disposed in the sensing sensor 3.

The sensing sensor 3 is disposed within a vacuum container 70 configuring the experiment device. The vacuum container 70 is configured to be able to cool the sensing sensor 3, and perform an experiment of causing a gas generated from a specimen 77 within the vacuum container 70 to attach to and detach from a crystal unit 4 as a substance to be sensed. In the experiment, as a measurement operation of the sensing device 1, a measurement of an oscillation frequency in parallel with a temperature control of the crystal unit 4 to cause this attachment and detachment is performed.

In the description hereinafter, an XYZ orthogonal axial system of a quartz crystal is used, and the description will be made with a side of a base body 32, described below, as a lower side and a Z-axis direction as a vertical direction in the sensing sensor 3 installed in the experiment device. However, the sensing sensor 3 is allowed to be used in any directions, and is not limited to be used in the direction described in the following description.

An overall configuration of the sensing sensor 3 will be described. As illustrated in FIG. 1, the sensing sensor 3 includes a cylindrically-shaped lid portion 31 with a lower side opened, the base body 32 that closes a lower portion of the lid portion 31, and a substrate 40 and a sensor substrate 50 mounted on the base body 32.

The base body 32 is, for example, configured of a nickel-plated copper into a disk shape, and has a mounting portion 33 mounted to be coolable to a cryogenic temperature by the experiment device and a projecting portion 34 having a planar shape in a circular shape at a center portion on an upper surface of the mounting portion 33. The projecting portion 34 has a depressed portion 35 in a rectangular shape in plan view formed, and the depressed portion 35 has a center portion that is further depressed to form a depressed portion 36. The depressed portion 36 has a peripheral edge portion on which a peripheral edge portion of the substrate 40 is supported via a plate-shaped spacer 37 as a heat insulating member. On the substrate 40, integrated circuit chips (IC chips) 41 to 43 and a heater 47 are mounted.

The depressed portion 36 has a bottom portion in which a hole portion 36a is formed, and a plurality of cables 62 are inserted through the hole portion 36a. The cables 62 form a conductive path that electrically connects a wiring pattern disposed on the substrate 40 to a connecting terminal disposed on a connector 61 disposed on a lower side of the base body 32. The connector 61 is inserted into a connection member, not illustrated. The connecting terminal of the connector 61 is electrically connected to a connecting terminal of the main body portion 2 disposed outside the vacuum container 70 via this conductive path disposed in the connection member. The electrical connection with the main body portion 2 is made by the connector 61 being thus inserted, and therefore, the sensing sensor 3 is removable from the main body portion 2.

The substrate 40 has an upper surface whose right and left end edge portions are provided with sockets 64. A plate-shaped cover 65 is disposed on the socket 64 to cover the IC chips 41 to 43 and the heater 47. A plurality of pins 66 that are inserted into the sockets 64 and extend in the Z-direction are disposed, and the sensor substrate 50 is supported in a horizontal posture above the cover 65 by the pins 66. The pins 66 have lower end portions passing through the substrate 40 and the spacer 37, and are connected to the base body 32. These pins 66 are conductive members as well as supporting members supporting the sensor substrate 50.

The sensor substrate 50 has an upper surface on which a depressed portion 52 is formed. In the sensor substrate 50, a heater 54 configured of a heating resistor for heating the crystal unit 4 is implanted. The crystal unit 4 as a piezoelectric resonator is disposed on the sensor substrate 50 so as to cover an opening of the depressed portion 52, and includes, for example, a circular plate-shaped crystal element 4a as an AT-cut piezoelectric piece. As illustrated in FIG. 2, the crystal element 4a has an upper surface side and a lower surface side on each of which a pair of first excitation electrodes (reaction electrodes) 4b, 4c, a pair of second excitation electrodes (reference electrodes) 4d, 4e, and wiring patterns, not illustrated, respectively connected to these excitation electrodes are formed, for example, of gold (Au).

In the crystal element 4a, a region sandwiched between the first excitation electrodes 4b, 4c is a first vibrating region 40A and a region sandwiched between the second excitation electrodes 4d, 4e is a second vibrating region 40B. This crystal unit 4 is cooled by heat transfer via the pins 66 and the sensor substrate 50 when the base body 32 is cooled. On the other hand, the crystal unit 4 is heated by heat transfer from the sensor substrate 50 caused by a temperature of the heater 54 as a temperature changing unit being increased. Furthermore, the crystal element 4a has an upper surface on which the temperature sensor 55 for detecting a temperature of the crystal unit 4 is disposed, and the main body portion 2 performs temperature detection on the basis of the detection signal output from this temperature sensor 55.

The lid portion 31 described above covers above the crystal unit 4 and the sensor substrate 50, and is arranged to surround a peripheral area of the projecting portion 34 of the base body 32, and thus, the lid portion 31 and the base body 32 are engaged. The lid portion 31 has a top surface portion in which a cone-shaped opening portion 31a is formed. The first excitation electrodes 4b on the upper surface side of the crystal unit 4 faces the opening portion 31a, and the second excitation electrodes 4d is secluded from an outside space of the sensing sensor 3. The opening portion 31a has a lower end separated from the surface of the crystal unit 4 by 0.5 mm.

The excitation electrodes 4b to 4e, the heater 54, and the temperature sensor 55 are each electrically connected to the wiring pattern on the substrate 40 via the wiring pattern formed on the sensor substrate 50 and the conductive path made of the pins 66 and the sockets 64. The conductive path being thus formed and the wiring pattern of the substrate 40 and the connecting terminal of the main body portion 2 being electrically connected via the cable 62 as described above allow a power to be fed to the respective circuit elements included in the IC chips 41 to 43, the heater 47, and the temperature sensor 55 from the main body portion 2, the excitation electrodes 4b to 4e to be electrically connected to an oscillator circuit 44, described below, to oscillate the crystal unit 4, and a frequency signal from the oscillator circuit 44 and a detection signal from the temperature sensor 55 to be extracted to the main body portion 2.

The IC chips 41 to 43 will be described in details. The IC chip 41 is configured of a semiconductor, for example, silicon. For example, the oscillator circuit 44 is formed on the IC chip 41, a regulator 45 is formed on the IC chip 42, and two switches 48, 49 are formed on the IC chip 43. The regulator 45 adjusts a voltage supplied to the oscillator circuit 44 from the main body portion 2.

The heater 47 on the above-described substrate 40 is a heating resistor of, for example, approximately 300 Ω at ordinary temperature that heats the respective circuit elements disposed on the IC chips 41 to 43 and ensures an operation in a relatively low temperature environment. The heater 47 has an one end connected to a conductive path connecting the main body portion 2 to the regulator 45 and has the other end of the heater 47 grounded. Accordingly, the regulator 45 and the heater 47 are each connected in parallel to the main body portion 2 and identical voltages are applied. For example, a voltage of 3 V is applied to the oscillator circuit 44 from the regulator 45.

The switch 48 connects any one of the excitation electrodes 4b, 4d to the oscillator circuit 44, and the switch 49 connects any one of the excitation electrodes 4c, 4e to the oscillator circuit 44. Operations of the switches 48, 49 are synchronized to one another, and a state where the excitation electrodes 4b, 4c are connected to the oscillator circuit 44 and a state where the excitation electrodes 4d, 4e are connected to the oscillator circuit 44 are switched in a time sharing manner, thus vibrating each of the first vibrating region 40A and the second vibrating region 40B.

Subsequently, the main body portion 2 that forms a power supplying unit will be described. The main body portion 2 includes a control unit 20, a power supply unit 21, a frequency measuring unit 22, a temperature detector 23, an operation unit, and a display unit. The power supply unit 21 is, for example, configured as a voltage changing unit including a voltage variable regulator, and outputs a voltage to the heater 47 and the regulator 45, where this output voltage is changeable. Accordingly, the supplied electricity to the heater 47 and the heat generation amount of the heater 47 change.

The regulator 45 also generates heat corresponding to a difference between an output voltage (3 V) to the oscillator circuit 44 and an output voltage to the regulator 45. The IC chip 42 on which this regulator 45 is formed plays a role of heating the IC chips 41, 43 together with the heater 47 and ensuring the operations of the oscillator circuit 44 and the switches 48, 49 under a low temperature environment. In the description hereinafter, an output voltage from the power supply unit 21 to the heater 47 and the regulator 45 is V1.

The frequency measuring unit 22 detects presence or absence of an output of a frequency signal from the oscillator circuit 44, and measures the frequency when the frequency signal is output. That is, a first oscillation frequency F1 in the first vibrating region 40A on a reaction electrode side and a second oscillation frequency F2 in the second vibrating region 40B on a reference electrode side are each measured by the frequency measuring unit 22. The temperature detector 23 detects a temperature of the crystal unit 4 from a detection signal output from the temperature sensor 55.

As described in SUMMARY, the oscillator circuit 44 is preferred to be a lower temperature within an operable temperature range in order to stably oscillate the crystal unit 4. The control unit 20 includes a program for automatically configuring the output voltage V1 such that the oscillator circuit 44 has such a temperature when the measurement operation of the sensing device 1 is performed. As will be described in detail later, the control unit 20 gradually increases the output voltage V1 in predetermined increment amounts from an initial voltage V0, and determines a value at the measurement operation on the basis of the presence or absence of the detection of the frequency signal that is increasing.

Data on the initial voltage V0 and an incremental voltage α as the increment amount is stored in a storage unit of the main body portion 2, not illustrated. Note that the initial voltage V0 is a minimum voltage that can stably operate the oscillator circuit 44 in the configuration of the sensing sensor 3, for example. For one example, the initial voltage V0 is 5 V, and the voltage α is 0.5 V. The storage unit also stores data of a temperature equal to or less than a lower limit temperature (described as an operable temperature T°C) in a range in which the IC chips 41 to 43 can operate and an upper limit voltage Vh as an upper limit value of the output voltage V1 used in the auto-configuration of this output voltage V1. T°C is, for example, set to approximately -160°C. The upper limit voltage Vh is, for example, the lowest value among a rated voltage of the regulator 45, a rated voltage of the heater 47, and a voltage that can be output by the power supply unit 21, and, for example, is 12 V.

The display unit disposed in the main body portion 2 is configured of a lamp, a liquid crystal screen, and the like, and displays each of the first oscillation frequency F1, the second oscillation frequency F2, and the detection temperature by the temperature sensor 55. When the configuration fails to be performed in a configuration process of the output voltage V1, described later, the display unit displays a message to that effect. The operation unit in the main body portion 2 is configured of a switch and a button operated by the user, and a predetermined operation on this operation unit allows the auto-configuration the output voltage V1.

The experiment device will be further described. The vacuum container 70 configuring the experiment device has a side surface configured as a cooling unit 71 for cooling the sensing sensor 3. The cooling unit 71 is formed such that a portion opposed to the center of the bottom portion of the base body 32 penetrates so as to allow the connector 61 of the main body portion 2 to be disposed when the sensing sensor 3 is installed. The cooling unit 71 includes, for example, a flow passage 71a through which a cooling medium, such as a liquid nitrogen (N), is distributed, and cools the base body 32 down to approximately -190°C. The crystal unit 4 is also coolable down to a similar temperature by heat conduction via the above-described pins 66 and the like.

The vacuum container 70 is internally provided with a pedestal portion 73 for supporting the specimen 77 at a position opposed to the opening portion 31a of the sensing sensor 3. This pedestal portion 73 is configured to heat the specimen 77 to a predetermined temperature by a heating mechanism 74. The vacuum container 70 is connected to a vacuum exhaust mechanism 76 via an exhaust passage 75 and configured to be evacuated to a predetermined degree of vacuum.

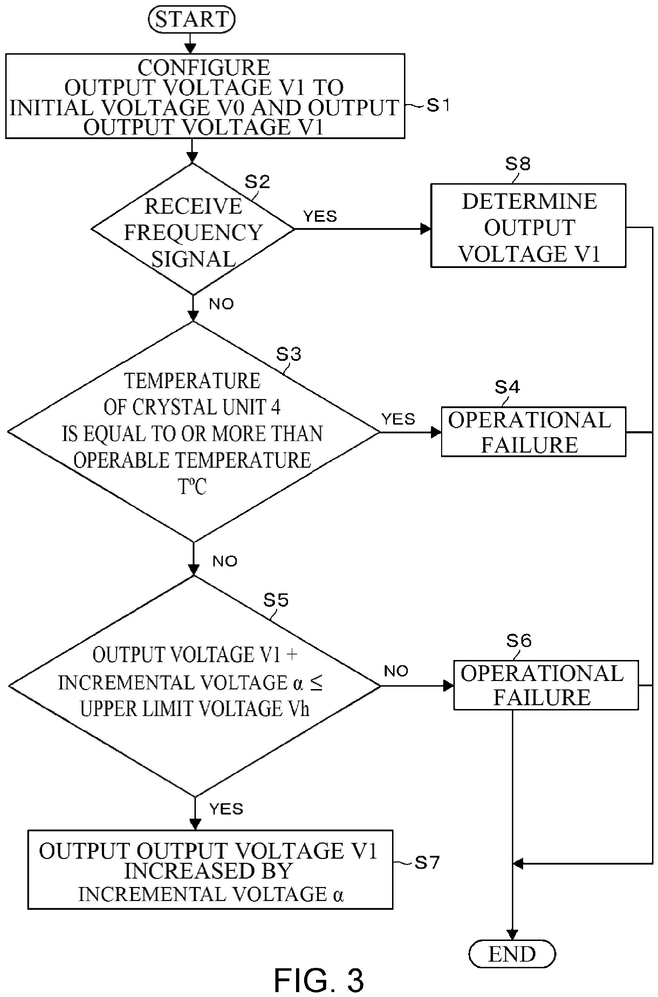

Before the measurement operation of the sensing device 1 is performed (that is, before the experiment is started), the auto-configuration of the output voltage V1 is performed. FIG. 3 is a flowchart of the auto-configuration, and is executed by the control unit 20. After firstly confirming a temperature detected by the temperature sensor 55 is a temperature of approximately -190°C, which is the temperature of the environment where the sensing sensor 3 is installed, an experimenter performs a predetermined operation for starting the auto-configuration on the operation unit of the main body portion 2. The power supply unit 21 applies the initial voltage V0 that is, for example, 5 V to the regulator 45 and the heater 47 as the output voltage V1 (Step S1). After a lapse of a predetermined period from the start of application, a determination of whether a frequency signal is output from the oscillator circuit 44 to the main body portion 2 or not is made (Step S2).

When the determination that the frequency signal is not output is made at Step S2, a determination of whether the detection temperature by the temperature sensor 55 is equal to or more than the operable temperature T°C or not is made (Step S3). When the determination that the detection temperature is equal to or more than the operable temperature T°C is made at Step S3, a display indicating unmeasurable due to an operational failure of the sensing device 1 is made (Step S4), and the auto-configuration is terminated.

When the determination that the detection temperature is less than the operable temperature T°C is made at Step S3, a determination of whether the output voltage V1 + the incremental voltage α is higher than the upper limit voltage Vh or not is made (Step S5). When the determination that the output voltage V1 + the incremental voltage α is higher than the upper limit voltage Vh is made at Step S5, a display indicating unmeasurable due to an operational failure of the sensing device 1 is made (Step S6), and the auto-configuration is terminated.

When the determination that the output voltage V1 + the incremental voltage α is equal to or less than the upper limit voltage Vh is made at Step S5, the output voltage V1 is increased by α from the voltage by then. That is, the output voltage V1 is changed to be a voltage that has been compared with the upper limit voltage Vh at Step S5 (Step S7). Thus, a temperature increase of the regulator 45 and the heater 47 is caused, thereby increasing the temperatures of the IC chips 41, 43. The process after Step S1 is then performed again.

When the determination that the frequency signal is output from the predetermined oscillator circuit 44 to the main body portion 2 is made at Step S2, the output voltage V1 at this determination is determined to be used at the measurement operation (Step S8), and the auto-configuration is terminated and this output voltage V1 is maintained. The first oscillation frequency F1 and the second oscillation frequency F2 are measured from the obtained frequency signal, and are displayed on the display unit.

Thereafter, for example, the inside of the vacuum container 70 is evacuated to a predetermined degree of vacuum, and the pedestal portion 73 is heated by the heating mechanism 74. When the above-described auto-configuration is performed, since the crystal unit 4 is cooled, the gas generated from the specimen 77 by heating the pedestal portion 73 enters the sensing sensor 3 via the opening portion 31a and is attracted to the first excitation electrode 4b. Thereafter, the measurement operation is started as soon as the experimenter performs the predetermined operation from the operation unit of the main body portion 2, and the power feeding to the heater 54 of the sensor substrate 50 is controlled such that, for example, the detection temperature of the crystal unit 4 increases at a speed of, for example, 1°C/1 minute. Such temperature increase of the crystal unit 4 is continued until the detection temperature reaches a predetermined temperature, and the first oscillation frequency F1 and the second oscillation frequency F2 are monitored by the main body portion while the temperature control of the crystal unit 4 is thus performed. The temperature increase and the monitoring of the frequency are stopped when the detection temperature reaches the predetermined temperature, and the measurement operation of the sensing device 1 is terminated.

For example, the experimenter obtains data of secular change of these difference values between the first oscillation frequency F1 and the second oscillation frequency F2, and identifies the substance to be sensed and calculates an adsorption amount and the like from the data. While the first oscillation frequency F1 and the second oscillation frequency F2 described above are being obtained, the output voltage V1 is maintained at the value determined at Step S8 of the process described above. Note that the control of the power feeding to the heater 54 described above is also performed by the program of the control unit 20.

While the sensing sensor 3 is disposed within the vacuum container 70 of the experiment device in the above-described example, the sensing sensor 3 is allowed to be disposed in various environments, not limited to within such a vacuum container 70. When the sensing sensor 3 is disposed in such various environments, the main body portion 2 can change the output voltage V1 to have a temperature at which the oscillator circuit 44 and the switches 48, 49 are operable and prevent the oscillator circuit 44 from having an excessively high temperature. Accordingly, the crystal unit 4 is stably oscillated, and the first oscillation frequency F1 and the second oscillation frequency F2 can be measured. As the result, the accuracy of the experiment can be enhanced.

Provisionally assume that a plurality of the sensing sensors 3 are installed in an identical environment with a relatively low temperature, the output voltage V1 is unchangeable, and the same output voltage V1 is supplied to each of the sensing sensors 3. Even in this case, there may occur a situation where a certain sensing sensor 3 can measure the frequency and another sensing sensor 3 fails to measure the frequency due to individual differences between the sensing sensors 3. That is, even the sensing sensors 3 disposed in the identical environment can have different appropriate output voltages V1, and therefore, the appropriate output voltage V1 needs to be configured for each sensing sensor 3 if the output voltage V1 is not changed. Therefore, the manufacturing process of the device may become complicated. The sensing device 1 that can change the output voltage V1 allows supplying the appropriate output voltage V1 to each of the sensing sensors 3 while preventing such a manufacturing process complication.

Since the output voltage V1 is automatically configured as described in FIG. 3, a burden on a user of the device is less. This auto-configuration gradually increases the output voltage V1, and each time the increase is made, a determination of whether this output voltage V1 is appropriate or not is made by the determination of the presence or absence of the output of the frequency signal. Therefore, it is prevented that the output voltage V1 to be determined is determined to be a relatively large value. Accordingly, the oscillation of the crystal unit 4 can be stabilized with more certainty. Since a thermal effect on the crystal unit 4 by the heater 47 and the regulator 45 is reduced, the crystal unit 4 can be cooled down to be a relatively low temperature, and therefore, an application range of the sensing device 1 can be expanded when experiments are performed. The above-described incremental voltage α is not limited to be constant in one measurement operation, and may be changed upon repeating the sequence of determination process after Step S1. For example, as the number of repetition increases, the incremental voltage α may be decreased.

In heating the IC chips 41, 43 as described above, the regulator 45 and the heater 47 are each connected in parallel to the main body portion 2, and generate heat by respective applications of the output voltage V1 from the main body portion 2. Accordingly, while the electric power supplied to the sensing sensor 3 is being reduced, the IC chips 41, 43 increase the heat generation amounts, and then the frequency signals can be obtained by the main body portion 2, and thus, the operational cost of the sensing device 1 is reduceable.

Note that while the oscillator circuit 44, the regulator 45, and the switches 48, 49 are described to be included in the separate IC chips, they may be included in a common IC chip. The heater 47 is not limited to be disposed separately from the IC chip, but is allowed to be in a configuration incorporated in the IC chip.

The sensing sensor is not limited to have a structure similar to that of the sensing sensor 3, but may, for example, include a different heat insulating structure of the oscillator circuit 44. The experiment device in which the sensing sensor 3 is disposed may have a configuration in which a liquid helium having a temperature lower than that of a liquid nitrogen is supplied instead of the liquid nitrogen to cool the sensing sensor 3.

While there has been described that the output voltage V1 is configured on the basis of the presence or absence of the output of the frequency signal from the oscillator circuit 44 to the main body portion 2, a level of this frequency signal may be detected, and when the level is equal to or less than a predetermined level, the output voltage V1 may be increased as the heating of the oscillator circuit 44 or the like is insufficient. That is, at Step S2 in the above-described process, a determination of whether the level of the detected frequency signal is equal to or less than a reference value or not is made. Thus, the output state of the frequency signal from the oscillator circuit 44 that serves as a determination criterion in determining the output voltage V1 is not limited to the presence or absence of the frequency signal.

The output voltage V1 is not limited to have a value at the measurement operation of the sensing device 1 determined by the auto-configuration. It is also allowed that the main body portion 2 is configured such that the output voltage V1 is changeable by an operation by the user from the operation unit, and the value at the measurement operation is determined by user operating from the operation unit while watching the display unit to confirm whether the first oscillation frequency F1 and the second oscillation frequency F2 are obtained or not.

Note that while the example of gradually increasing the temperature of the crystal unit 4 in the measurement operation has been described, the configuration is not limited to such a temperature control. For example, the crystal unit 4 may be kept at a predetermined temperature in order to observe a transition of the amount of the substance to be sensed in the environment where the sensing sensor 3 is installed.

While the heater 47 is preferred to be disposed on the substrate 40 on which these IC chips 41, 43 are mounted in order to efficiently heat the IC chips 41, 43, the configuration is not limited to such. For example, above the substrate 40, a substrate may be disposed close to the substrate 40, and the heater 47 may be disposed on this substrate. Thus, the heater 47 is only necessary to be disposed separately from the heater 54 of the sensor substrate 50, and heat the IC chip 41. Note that while it is preferred that both the first oscillation frequency F1 and the second oscillation frequency F2 be obtained, it is also allowed that only the first oscillation frequency F1 is obtained, and therefore, the configuration may be without the switches 48, 49. Accordingly, the heater 47 is only necessary to heat the IC chip 41 including at least the oscillator circuit 44.

The heater 47 is not limited to be connected to the conductive path that connects the regulator 45 to the main body portion 2, and may have a configuration in which an electric power is supplied independently from the regulator 45 and the electric power is changeable.

While the flow passage 71a of the cooling medium in the embodiment is formed in the vacuum container 70 of the experiment device and is not disposed in the sensing sensor 3, it may be disposed in, for example, the base body 32 of the sensing sensor 3, and may be disposed to cool a portion other than the base body 32 of the sensing sensor 3 as long as the crystal unit 4 can be cooled down to a desired cryogenic temperature. The sensing sensor 3 is not limited to be configured such that the crystal unit 4 is cooled from the outside of the sensing sensor 3, and may be incorporated with a mechanism that cools the crystal unit 4, such as a Peltier element, in the sensing sensor 3. This Peltier element is only necessary to be disposed to be in contact with a lower surface of the sensor substrate 50 so as to be able to cool the crystal unit 4 via the sensor substrate 50. Note that this Peltier element may be used also when the crystal unit 4 is heated, and the Peltier element corresponds to the temperature changing unit when the Peltier element is thus disposed. The crystal unit 4 is not limited to be cooled by an effect of the Peltier element or the flow passage 71a of the cooling medium, and is allowed to be cooled by a temperature of the natural environment where the sensing sensor 3 is arranged. This natural environment includes the outer space as well. Accordingly, when the sensing device 1 is used, the mechanism to cool the crystal unit 4 is dispensable.

The embodiment disclosed this time is illustrative in every point and should be considered not to be restrictive. The above-described embodiment may be omitted, replaced, changed, and combined in various manners without departing from accompanying claims and their spirits.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.

### Description of Reference Numerals

1: sensing device
2: main body portion
3: sensing sensor
4: crystal unit
4a: crystal element
4b, 4c: first excitation electrode (reaction electrode)
4d, 4e: second excitation electrode (reference electrode)
20: control unit
21: power supply unit
22: frequency measuring unit
23: temperature detector
31: lid portion
31a: opening portion
32: base body
33: mounting portion
34: projecting portion
35, 36, 52: depressed portion
36a: hole portion
37: spacer
40: substrate
40A: first vibrating region
40B: second vibrating region
41~43: IC chip
44: oscillator circuit
45: regulator
47, 54: heater
48, 49: switch
50: sensor substrate
55: temperature sensor
61: connector
62: cable
64: socket
65: cover
66: pin
70: vacuum container
71: cooling unit
71a: flow passage
73: pedestal portion
74: heating mechanism
75: exhaust passage
76: vacuum exhaust mechanism
77: specimen
S1~S8: step

## Claims

1. A sensing device (1) for sensing a substance to be sensed that is contained in a gas around a piezoelectric resonator (4) and that is attached to the piezoelectric resonator (4) based on change in an oscillation frequency of the piezoelectric resonator (4), the sensing device (1) comprising:
the piezoelectric resonator (4) to which the substance to be sensed attaches by being cooled;
a temperature changing unit (54), configured to change a temperature of the piezoelectric resonator (4);
a substrate (40) on which an integrated circuit chip (41, 42, 43) including an oscillator circuit (44) that oscillates the piezoelectric resonator (4) is disposed;
a frequency measuring unit (22), configured to receive a frequency signal output from the oscillator circuit (44) and measure an oscillation frequency of the piezoelectric resonator (4);
a heater (47) disposed separately from the temperature changing unit (54) for heating the integrated circuit chip (41, 42, 43); and
a power supplying unit (2), configured to change an electric power supplied to the heater (47).

2. The sensing device (1) according to claim 1, wherein
the power supplying unit (2) is a voltage changing unit (21), configured to change the electric power by changing a voltage supplied to the heater (47).

3. The sensing device (1) according to claim 2, wherein
the voltage changing unit (21) is configured to supply a voltage to the oscillator circuit (44) via a regulator (45) disposed on the substrate (40), and
the voltages supplied to the regulator (45) and the heater (47) are changed together.

4. The sensing device (1) according to claim 3, wherein the heater (47) is disposed on the substrate (40).

5. The sensing device (1) according to any one of claims 2 to 4, further comprising:
a control unit (20), configured to change a voltage supplied to the heater (47) corresponding to an output state of the frequency signal to the frequency measuring unit (22).

6. The sensing device (1) according to claim 5, wherein
the output state of the frequency signal is presence or absence of an output of the frequency signal to the frequency measuring unit (22), and
the control unit (20) is configured to determine the voltage supplied to the heater (47) based on the presence or absence of the frequency signal when the voltage applied to the heater (47) is increased from an initial value that is predetermined.
